# EUROPEAN PATENT SPECIFICATION

(11) **EP 1 397 287 B1**
(45) Date of publication and mention of the grant of the patent: **02.08.2006**
(21) Application number: 02738980.8
(22) Date of filing: 11.06.2002
(51) Int. Cl.: B63B 35/26, A01K 63/02

(54) **DEVICE FOR DISPLACEMENT OF LIVE FISH DURING UNLOADING OF A FISH CARRIER**
VORRICHTUNG ZUM SCHIEBEN VON LEBENDIGEN FISCHEN BEIM ENTLADEN EINES FISCHTRÄGERS
DISPOSITIF DESTINE AU DEPLACEMENT DE POISSON VIVANT LORS DU DECHARGEMENT D'UN NAVIRE DE TRANSPORT DE POISSON

(30) Priority: 12.06.2001 NO 20012898
(43) Date of publication of application: 17.03.2004
(73) Proprietor: Sintef Fiskeri Og Havbruk AS, 7465 Trondheim (NO)
(72) Inventor: BJORSHOL, Nils, Harald, N-7045 Trondheim (NO); Grontvedt, Odd, Eimar, N-7160 Bjugn (NO); HAGEN, Nils, N-7540 Klaebu (NO)
(74) Representative: Haley, Stephen
(86) International application number: PCT/NO2002/000206
(87) International publication number: WO 2002/100713

(56) References cited:
- GB-A- 1 297 611
- GB-A- 2 361 400
- US-A- 4 811 692

## Description

### Introduction.

This invention relates to a fish carrier or "well boat" with a sliding bulkhead. The fish carrier is used for transporting live fish, as salmon, cod or other fish.

### Statement of problem; known art.

During transport of live, adult fish in fish carriers, the fish must be unloaded, usually to a fish slaughterhouse. One efficient way to unload the fish is to have a sliding bulkhead which forces the fish towards one end of the tank, whereafter the water level is usually lowered and the crowded fish then having very limited space will be led out of the ship via a canal and a pump system. The fish is transported out to intermediate fish storage cages cages or tanks onshore. Such a sliding bulkhead requires that the tank for it to run through, has an even width and height so that there are no gaps between the sliding bulkhead's side edges and the tank's walls, bottom floor and ceiling. As such, a sliding bulkhead will not work for a doubly curved inner skin following the frame profiles and the ship's outer skin of the ship's hull, i.e. an inner skin which runs along the frame profiles and the outer skin, i.e. an inner skin having varying separations from the vessel's centreline. Sliding bulkheads according to the known art will also not work if the separation between the tank deck and an inclined tank floor is varying. The limitation of longitudinally running generally prismatic wells incurs a non optimal use of the hull's volume, and a straight inner wall is built so that the tank gets a volume loss towards the outer skin of the vessels, and that the bulkheads in the ends of the tank must be placed closer than strictly necessary to each other, where the curvature of the vessel requires that the prismatic tanks must have their ends. Cultivated fish may be regarded as domestic animals and should be treated in an acceptable way with respect to domestic animal care. Today's method involves lowering the water level in the tank so that the fish must be pumped up from a lower level, incurs that the fish becomes stressed, and is also not desired from a viewpoint of domestic animal care. We particularly know that salmon does not tolerate to be exposed to underpressure and may easily develop haematosis along the spine and may thus have reduced commercial value. Thus pumping which incurs underpressure should be avoided. Further, the lowering of the water level inside the tank results in that a free water surface inside the vessel, which may be a disadvantage to the vessel's stability. Normally, fish carriers are provided with starboard and port well tanks separated by a longitudinal bulkhead along the centreline of the vessel because one single free water surface inside the vessel is undesirable. The longitudinal bulkhead also improves the vessel's mechanical strength. Unloading water from only one of the starboard tank or the port tank is in itself a disadvantage. Today's practice of lowering the water level in a tank requires much pump energy. Diesel electric generators provide electricity for pumps for discharging water from the tanks, and this self-provided energy from the vessel's generators may be much more expensive than corresponding electrical energy from a land-based electrical supply network. Discharging the tanks of water during unloading of fish may in the known art constitute a loss of energy, and is also unnecessarily time-consuming.
A solution to the mentioned problems; definition of the invention.

The present invention is a solution to several of the above mentioned problems, and is a device for displacing live fish in a well-tank in a fish carrier, in which the well-tank is sideward limited by a generally smooth inner skin in a (preferably doubly curved) hull inside frame profiles of varying moulded breadth, and in its ends limited by a forward frame bulkhead and an aft frame bulkhead, and in the top limited by a well deck, with a transverse, preferably perforated displaceable shot plate arranged to run along preferably the vessel's long axis in desired positions between the forward frame bulkhead and the aft frame bulkhead, characterized by:
at least one side-displaceable shot plate arranged generally running in a transverse direction on the displaceable shot plate and arranged to run with an edge near the frame profiles, on order to cover the cross section area in any intermediate position of the well tank.

In an advantageous embodiment of the invention the sliding bulkhead has a profile generally similar to the smaller of the forward or aft frame bulkheads or the smallest of the frame profiles of the well tank. The side-displaceable shot plate should advantageously have an edge profile generally corresponding to the frame profiles and a width smaller than or equal to the sliding bulkhead itself, and at least of equal breadth to the difference between the sliding bulkhead and the broadest of the frame profiles or forward or aft frame bulkheads, so that there would be no need for more, telescoping side-displaceable shot plates, even though such a solution can be imagined. In an advantageous embodiment of the invention the shot plate is arranged to run along a bottom rail extending in the direction with the long axis of the ship, and a corresponding parallel running top rail.

### Short figure captions.

Fig. 1 illustrates a perspective view of a vessel having a well room drawn without a deck, outer skin, and inner skin, at the actual portion of said vessel. A sliding bulkhead according to the invention is illustrated as situated near midship in a port side well room.
Fig. 2 illustrates a perspective view as seen from the stern end of said well room, looking forward towards the forward frame bulkhead of the well room. The frame profiles and the sliding bulkhead is illustrated in somewhat more detail, with guide rails and toothed rails for movement of the sliding bulkheads.
Fig. 3a illustrates a vertical plane section across the ship and according to the invention, drawn relative to different frame profiles and extending athwartship of a longitudinal bulkhead or a centre bulkhead
Fig. 3b illustrates a drive unit and a toothed rail for guidance and displacement of a sliding bulkhead.
Fig. 4 is a section of a preferred embodiment of the sliding bulkhead according to the invention, as seen towards the guidance rails on the longitudinal bulkhead.

### A description of a preferred embodiment of the invention.

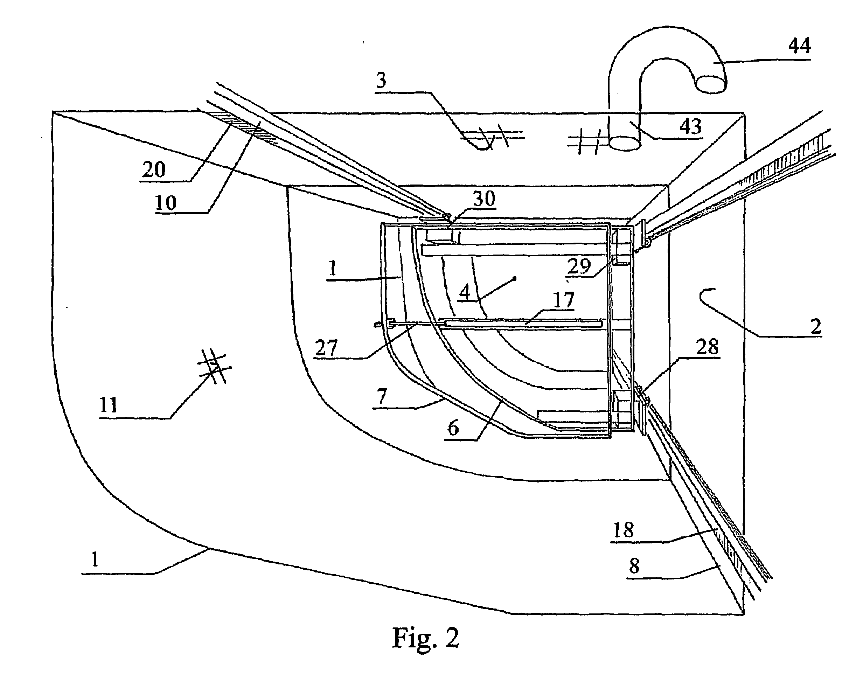

Figure 1 illustrates a preferred embodiment of the invention with a sliding bulkhead for displacement of live fish in a well room (0) in a fish carrier. The well room is sideward limited by a generally smooth-walled inner skin (11) of a preferably "doubly curved hull", i.e. a hull having doubly curved surface, said inner skin arranged along frame profiles (1) of varying moulded breadth. In the forward and aft ends of the well room (0) the well room is limited by means of a forward frame bulkhead (4) and a corresponding aft frame bulkhead (5), and limited in the top by means of a well deck (3). An sliding bulkhead (6), preferably perforated, is arranged in an athwartship direction, is arranged to run longitudinally in the well room, mainly along the vessel's main axis, and may be stopped in desired positions between the forward frame bulkhead (4) and the aft frame bulkhead (5). At least one sideward moveable sliding bulkhead (7) is arranged for running generally in an athwartship direction with respect to the sliding bulkhead (6). The purpose in that the sideward moveable sliding bulkhead (7) may be displaced sideward with respect to the long axis of the hull, is that the sideward displaceable shot plate (7) shall run, in the vessel's, and thereby the well room's longitudinal direction, with a profiled edge corresponding to and near to the smooth inner skin (11) of the well room. It is considered as an advantage for the invention that the well room in fact should be provided with an inner skin (11), as it would be disadvantageous if the sideward displaceable shot plate should run against the inner side of the outer skin (12) and be retracted somewhat for passing each naked profile frame rib. The sliding bulkheads according to the invention can be halted in any intermediate position between the forward and the aft frame bulkheads (4,5), and will cover the cross-section area of the well room (0) as long as the sideward sliding bulkhead is extended toward the inner skin (11) of the hull's side.

In a preferred embodiment of the invention the sliding bulkhead (6) has a profile generally similar to the smallest/narrowest of the frame bulkheads (4,5), or the smallest of the frame profiles (1). This is well illustrated in Fig. 2. In an even more preferred embodiment of the invention the sideward displaceable shot plate (7) has an edge profile generally corresponding to the frame profiles (1) and a breadth which is smaller or equal to the sliding bulkhead (6), and at least as broad as the difference between the sliding bulkhead (6) and the widest of the frame profiles (1) or the frame bulkheads (4,5). The sideward sliding bulkhead (7) can not be broader than the sliding bulkhead (6) without modifications if the sliding bulkhead (6) shall have the same width as the forward frame bulkhead (4), as the two sliding bulkheads (6,7) would not otherwise be able to approach and come in close contact with the forward frame bulkhead (4). Because the frame profiles and thus the inner skin (11) in a doubly curved hull sidewall varies from one frame profile to the next frame profile, one particular side displaceable shot plate profile will not be perfectly adapted to more than one frame profile. This may be remedied by means of elastic flaps (49) arranged extending from the edge of the sideward sliding bulkhead's profile. These flaps (49) arranged around the sliding bulkhead (6) and the sideward sliding bulkhead (7) prevents fish from passing between the sliding bulkhead (6) or the sideward sliding bulkhead (7) and the frame profiles (1), a longitudinal bulkhead (2), or the above extending well deck (3). Brushes may replace the flexible flaps (49), but brushes are regarded somewhat disadvantageously because of the very large associated material surface which may constitute a substrate for extensive bacterial and algal growth.

The sliding bulkhead (6) is arranged for running along a bottom rail (8) and a correspondingly parallel running top rail (9) extended in the vessel's longitudinal direction. The sliding bulkhead (6) is provided with a drive unit (28) arranged for displacing the sliding bulkhead (6) along the bottom rail (8), preferably by means of a rack gearing along a toothed rail (18). This is illustrated in Fig. 2. The sliding bulkhead (6) may also be provided with a longitudinally running drive unit (29) arranged for displacing the sliding bulkhead (6) along the top rail (9), preferably by means of rack gearing / cogged-wheel propulsion along a toothed rail (19). Advantageously, the sliding bulkhead (6) is also provided with a longitudinally running drive unit (30) arranged for displacing the sliding bulkhead (6) also along a rail (10) extending along and under the well deck (3), preferably by means of rack gearing propulsion along a toothed rail (20). In a preferred embodiment of the invention, the toothed rail (18) is an integral part of the bottom rail (8). Further, the toothed rail (19) is preferably integrated in the top rail (9) and the toothed rail (20) integrated in the rail (10). Having three longitudinally running guide rails (8, 9, 10) and synchronized drift along the rails, one may avoid that the sliding bulkhead warping out of the ideal vertical, transversal position with respect to the vessel's longitudinal axis.

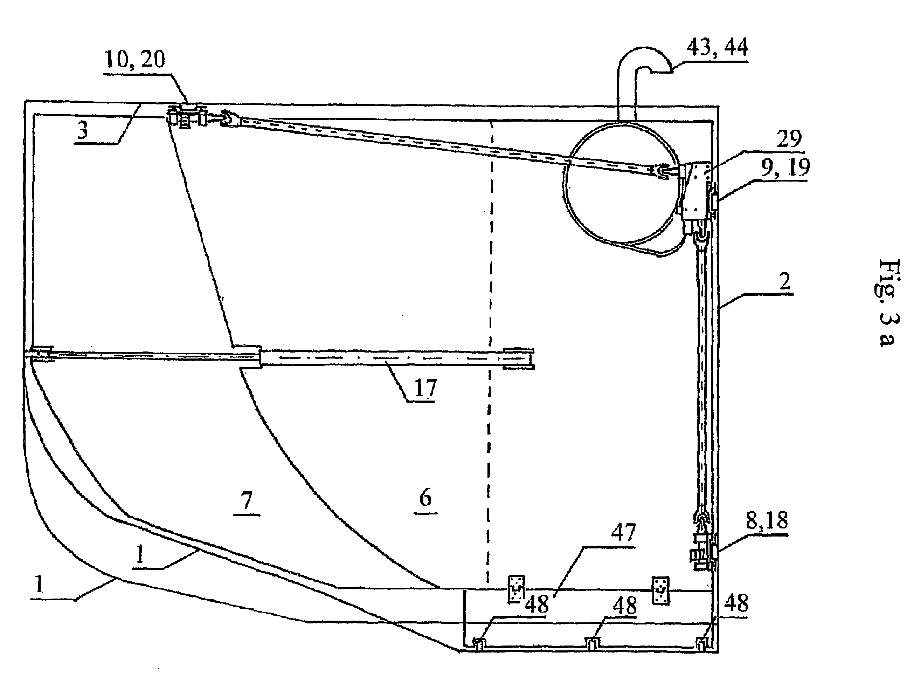

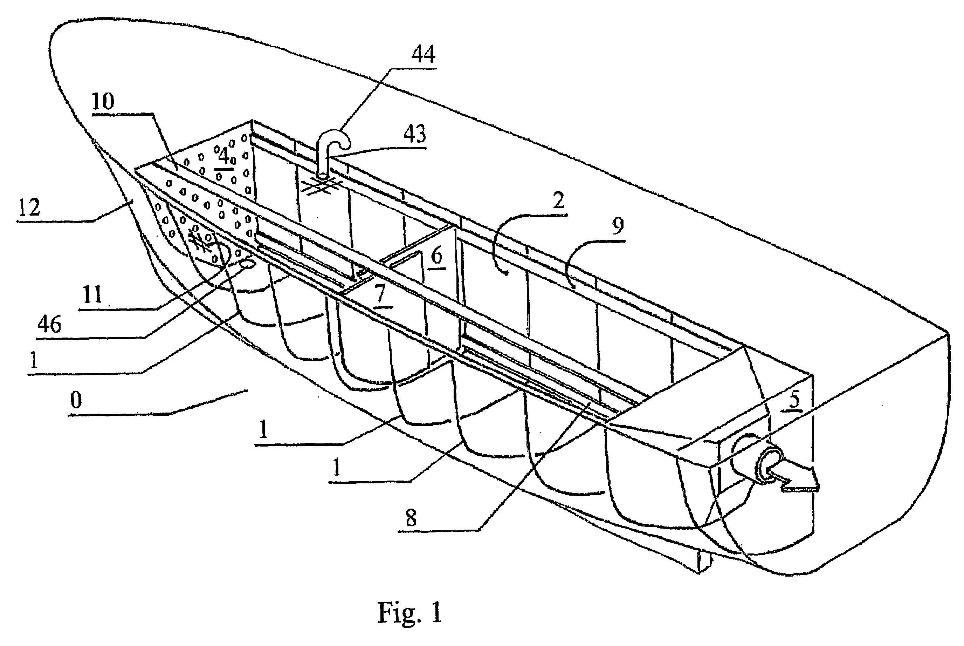

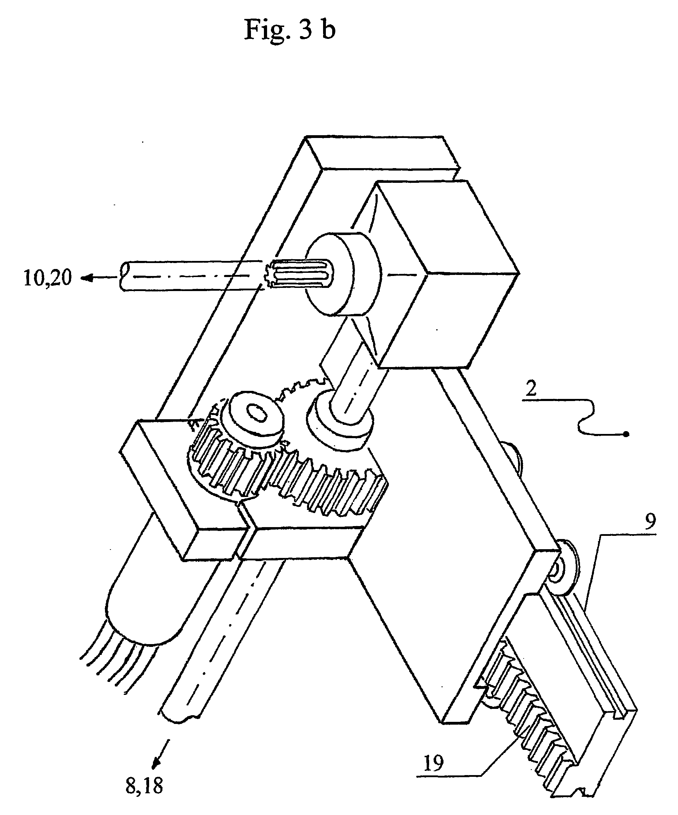

In one possible embodiment according to the invention, the rack gearing propulsion along the toothed rails (18) and (19) or also (20) may take place by means of rack gearing propulsion with power transfer via toothed gear transmissions and preferably cardan transmission axles from a common drive unit (29) as illustrated in Figs. 3 and 3b. This feature will reduce the number of components in the propulsion apparatus, and is thus advantageous because the propulsion apparatus, according to a preferred method by means of the illustrated solution, will reside under water.

If the vessel is equipped with a well room (0) running longitudinally and covering the entire breadth of the vessel, it may be required to arrange both a starboard and a port sideward sliding bulkheads (7) on a centrally running sliding bulkhead (6). Even if this is possible, it is less desirable to build a vessel having only one well room covering the ships breadth. Due to safety concerns and due to the vessel's strength, a vessel with a size larger than some limit will require a centrally running bulkhead or a longitudinal bulkhead (2) in the vessel. At the inner edge of a sliding bulkhead (6), the inner edge will run adjacent to such a longitudinal bulkhead or centre bulkhead (2), such that for each sliding bulkhead (6) only one sideward sliding bulkhead (7) will be required to run along either starboard or port hull side's frame profiles (1). This situation is illustrated in the attached Figures 1, 2, and 3.

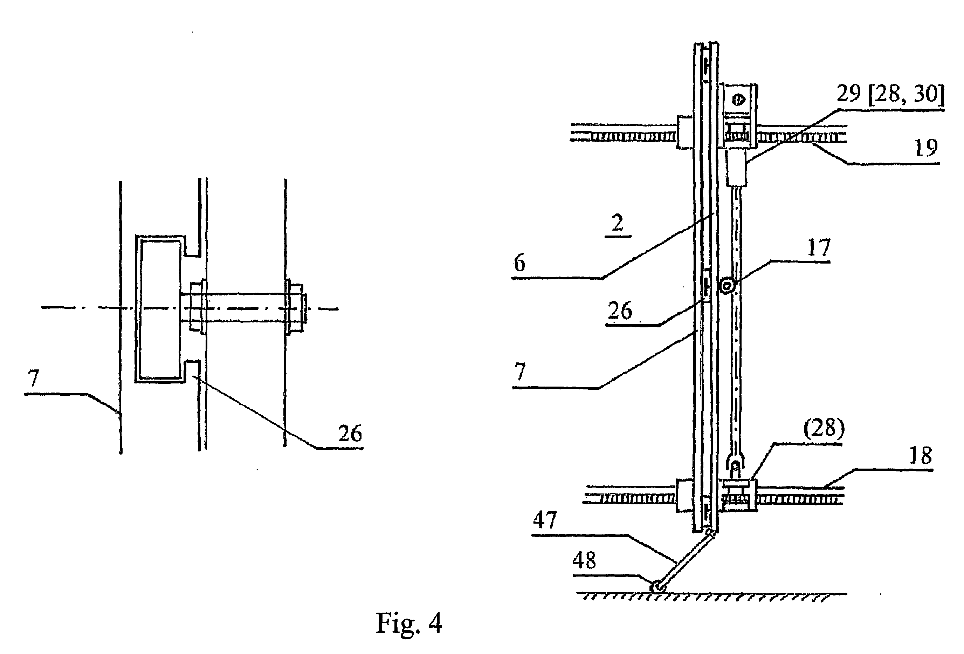

We now refer to Fig. 3a and the right portion of Fig. 4 in which is illustrated a sideward drive unit (17) arranged for displacing or moving the sideward sliding bulkhead (7) in a transversal or sideward direction with respect to the sliding bulkhead (6). In a preferred embodiment of the invention there is arranged a horizontally directed doubly acting hydraulic cylinder (17) on the shot plate (6), and the cylinder's interacting piston rod (27) arranged with an attachment to the sideward sliding bulkhead (7). There are generally horizontally directed guide rails (16) arranged on the sliding bulkhead (6) for horizontal guiding of corresponding guide rails (26) arranged on the sideward sliding bulkhead (7). A section of such guide rails is illustrated in the left portion of Fig. 4.

In a vessel which is being planned for construction according to the present invention the bottom is slightly inclined and lower toward the stern end. In order to compensate for the gap which will arise between a horizontally running sliding bulkhead (6) and the inclined bottom of the well room (0), there is arranged a bottom running flap (47) which is hinged from the lower edge of the sliding bulkhead (6) and provided with rollers (48) arranged for running along the bottom part of the well room or the frame profiles, all in order to increase the draught of the sliding bulkhead (6) as it runs along an inclined bottom profile in the well room's (0) bottom, or along the bottom portion of the inner skin (11) over the frame profiles (1) if the inner skin (11) itself constitutes an essential portion of the bottom of the well room.

In a preferred embodiment of the invention, a funnel plate (41) is arranged near the aft frame bulkhead (5). The funnel plate's (41) narrower opening is directed aft, directed away from the sliding bulkhead (6). During transport with fish in the well room, the sliding bulkhead (6) is placed near the forward frame bulkhead (4), and the fish may move freely in the well room (0). For unloading the fish, the sliding bulkhead (6) is displaced aft toward the aft frame bulkhead (5) toward an outlet channel (42) in the end of the funnel plate (41), as an outlet for fish. The outlet channel (42) is at the inlet provided with a closing device (50) for preventing fish from being in the outlet channel when the outlet channel is not used for unloading fish.

According to an advantageous embodiment of the invention there is arranged a water outlet shaped as a pipe (43) with a gooseneck (44) from the top of the well room (0). Water enters the well room (0) via other inlet channels (46) for increasing the water column pressure in the well room (0) for more efficient unloading of fish through the outlet channel (42). Such a gooseneck pipe (43,44) can be used by the unloading personnel for inspecting that sufficient amounts of water are pumped in, so a small surplus of water is discharged through the gooseneck (44). Additionally, such a gooseneck pipe on top of the well room may contribute to assure that no free surface is formed on the water inside the well room (0). A perforated plate (45) is in a preferred embodiment of the invention arranged near the forward frame bulkhead (4). An inlet channel (46) for water is arranged between the perforated plate (45) and the forward frame bulkhead (4). The inlet channel (46) is preferably a bottom valve (46). Oxygen-rich sea water is required to be pumped into the well room, also during transport of the fish. Flaps on the inlet channels near the bow may guide water in through the bottom valves (46) while the ship is running through the sea. At the same time, water may run out from the aft end of the well room (0), e.g. through corresponding bottom valves, so that pumps are not necessarily running for exchanging water during the transport itself.

In the well deck (3) of a preferred embodiment of the invention, well hatches (52) (not illustrated) may be arranged in which perforated plates (53) may be arranged in level with the ceiling surface of the well deck, so that the sliding bulkhead (6) and the sideward sliding bulkhead (7) may pass the hatches (52) without creating a passage channel via the well hatches (52) above the sliding bulkheads' edge.

The drive unit (28, 29, 30) may comprise synchronized drive electric motors, pneumatic motors, hydraulic motors, or guided wires, for driving forward or aft the sliding bulkheads.

## Claims

1. Device for displacing live fish in a well room (0) in a fish carrier, in which said well room (0) is sideward limited by a generally smooth inner skin (11) in a generally doubly curved hull over frame profiles (1) of varying moulded breadth, and limited in its ends by a forward frame bulkhead (4) and an aft frame bulkhead (5), and in its top preferably limited by a well deck (3), with a transverse, sliding bulkhead (6) arranged for running in the well room along said vessel's main axis to desired positions between said forward frame bulkhead (4) and said aft frame bulkhead (5),
**characterized by**
at least one sideward sliding bulkhead (7) arranged generally transversely running on said sliding bulkhead (6) and arranged for running with an edge along said frame profiles (1), for filling a varying cross section area of said well room (0) in every intermediate position between said forward and said aft frame bulkheads (4,5).

2. Device according to claim 1,
in which said sliding bulkhead (6) has a profile with the same general shape as the smaller of said frame bulkheads (4,5) or the smaller of the frame profiles (1).

3. Device according to claim 1,
in which said sideward sliding bulkhead (7) has an edge profile corresponding to the frame profiles (1) and a breadth less or equal to said sliding bulkhead (6), and at least as broad as the difference between said sliding bulkheads (6) and the broadest of said frame profiles (1) or said frame bulkheads (4,5).

4. Device according to claim 1,
in which the sliding bulkhead (6) is arranged for running along a bottom rail (8) and a corresponding parallel running top rail (9).

5. Device according to claim 4,
in which the sliding bulkhead (6) is provided with a drive unit (28) arranged for displacing the sliding bulkhead (6) along the bottom rail (8), preferably by means of a toothed gear along a cogged rail (18) which preferably is an integral part of said bottom rail (8).

6. Device according to claim 4,
in which the sliding bulkhead (6) is provided with a longitudinally running driving gear (29) arranged for displacing the sliding bulkhead (6) along said top rail (9), preferably by means of a toothed gear along a toothed rail (19) which may be an integral part of said top rail (9).

7. Device according to claim 4,
in which said sliding bulkhead (6) is provided with a longitudinally running drive gear (30) arranged for displacing said sliding bulkhead (6) along a rail (10) extending along and under a well deck (3), preferably by means of a toothed gear along a toothed rail (30) which may constitute an integral part of said rail (10).

8. Device according to claim 6 or 7, in which the toothed gear propulsion along the toothed rails (18) and (19) and also (20) takes place by means of toothed gear propulsion with power transmission via angular transmissions and preferably cardan transmission axles from a common driving gear (29).

9. Device according to claim 1,
in which the sliding bulkhead's inner edge runs along a longitudinal bulkhead or longitudinal central bulkhead (2), so that the sideward sliding bulkhead (7) only runs along starboard or port hull side's frame profiles (1).

10. Device according to claim 1,
in which a transverse drive gear (17) is arranged for displacing said sideward sliding bulkhead (7) transversely with respect to said sliding bulkhead (6).

11. Device according to claim 10,
with a horizontally directed double action hydraulic cylinder (17) arranged on said sliding bulkhead (6) and said cylinder's cooperating piston rod (27) arranged at said sideward sliding bulkhead (7).

12. Device according to claim 10,
in which generally horizontally arranged guide rails (16) are arranged on said sliding bulkhead (6) for horizontally guiding of corresponding guide rails (26) on said sideward sliding bulkhead (7).

13. Device according to claim 1,
having separate, independent shot plates (6) having corresponding sideward sliding bulkheads (7), said independent shot plates (6) arranged separately in well rooms (0) on starboard and port side of a longitudinal central bulkhead (2).

14. Device according to claim 1,
having several longitudinal well rooms (0) separated by two or more longitudinal bulkheads (2), in which at least one of starboard or port well room (0) is provided with a bulkhead (6) with a corresponding sideward sliding bulkhead (7).

15. Device according to claim 1,
in which a funnel plate (41) is arrange said aft frame bulkhead (5), in which said funnel plate's (41) narrower end is directed backward and away from said sliding bulkhead (6) and being provided with an outlet channel (42) generally at the end of said funnel shaped plate, said outlet channel (42) for unloading of fish, in which said outlet channel's (42) inlet is provided with a closing device (50) for preventing fish from being in the outlet channel when the outlet channel is not used for unloading of fish.

16. Device according to claim 15,
having a water outlet from the top of said well room (0) via a pipe (43) preferably provided with a gooseneck (44) for increasing the water column pressure in said well room (0) for more efficient outlet of fish through said outlet channel (42).

17. Device according to claim 1,
with a bottom running flap (47) hinged from a lower edge of said sliding bulkhead (6) and provided with rollers (48) arranged for running along a bottom portion of said frame profiles (1), for increasing said sliding bulkhead's (6) draught toward an inclined longitudinal profile of said frame profiles (1).

18. Device according to claim 1,
having brushes or flexible flaps (49) arranged around said sliding bulkhead (7) for preventing fish from passing between the sliding bulkhead (6) or the sideward sliding bulkhead (7) and the frame profiles (1), a longitudinal bulkhead (2), or the well deck (3).

19. Device according to claim 1,
in which a perforated plate (45) is arranged close to said forward frame bulkhead (4), and an inlet channel (46) for water, preferably a bottom valve, is arranged between said perforated plate (45) and said bulkhead (4).

20. Device according to claim 1,
in which well hatches (52) are arranged in said well deck (3), said well hatches having insertable perforated plates (53) being in level with the ceiling plates of said well deck (3).

21. Device according to one of claims 5, 6, or 7,
in which said drive gear (28, 29, 30) comprises synchronized electric motors.

22. Device according to one of claims 5, 6, or 7,
in which said drive gear (28, 29, 30) comprise pneumatic motors.

23. Device according to one of claims 5, 6, or 7,
in which said drive gear (28, 29, 30) comprise hydraulic motors.

24. Device according to one of claims 5, 6, or 7,
in which said drive gear (28, 29, 30) comprise guided wires for displacing said sliding bulkheads (6).

25. Method for displacing fish from a well room (0) in a fish carrier with the well room (0) being sideward limited by a generally smooth hull over frame profiles (1) of varying moulded breadth, and in its ends limited by a forward frame bulkhead (4) and an aft frame bulkhead (5), and in its top limited by a well deck (3), with a transverse, preferably perforated sliding bulkhead (6) arranged for running in said well room (0) generally along the main axis, to desired positions between said forward frame bulkhead (4) and said aft frame bulkhead (5),
**characterized in**
**that** a sideward displaceable shot plate (7) is moved in a transverse direction on said sliding bulkhead (6) so that it runs with an edge near said frame profiles (1) from said forward bulkhead (4) towards said aft frame bulkhead (5) and fills a cross-section area of said well room (0) while said displacement bulkheads (6,7) runs in said vessel's longitudinal direction, so that preferably all fish is displaced toward said aft frame bulkhead (5).

26. Method according to claim 25,
in which said sliding bulkheads (6,7) are driven toward a funnel plate (41) arranged near said aft frame bulkhead (5), so that fish is forced toward said funnel plate's narrower end being directed away from said displacement plate 6) and further forced out through an outlet channel (42), preferably at the end of said funnel plate (41).

27. Method according to claim 26,
in which water is pumped into said well room (0) so that water will rise in a water outlet from the top of said well room (0) via a pipe (43) having a gooseneck (44) so that an increase of the water column pressure arises in said well room (0) for more efficient unloading of fish through said outlet channel (42) .

## Patentansprüche

1. Vorrichtung zum Verschieben von lebendem Fisch in einem Laderaum (0) in einem Fischtransporter, wobei der Laderaum (0) durch eine allgemein glatte innere Haut (11) in einem allgemein doppelt gekrümmten Rumpf über Spantprofilen (1) variierender Breite auf Spanten seitlich begrenzt wird und an seinen Enden durch ein vorderes Spantschott (4) und ein hinteres Spantschott (5) begrenzt wird und oben vorzugsweise durch ein Laderaumdeck (3) begrenzt wird, mit einem querliegenden verschiebbaren Schott (6), das dafür eingerichtet ist, im Laderaum entlang der Schiffshauptachse zu gewünschten Positionen zwischen dem vorderen Spantschott (4) und dem hinteren Spantschott (5) zu laufen,
**gekennzeichnet durch**
wenigstens ein seitwärts verschiebbares Schott (7), das allgemein in Querrichtung laufend auf dem verschiebbaren Schott (6) angeordnet ist und das dafür eingerichtet ist, mit einer Kante entlang der Spantprofile (1) zu laufen, um in jeder Zwischenposition zwischen dem vorderen und dem hinteren Spantschott (4, 5) eine variierende Querschnittsfläche des Laderaums (0) auszufüllen.

2. Vorrichtung nach Anspruch 1, bei der das verschiebbare Schott (6) ein Profil mit derselben allgemeinen Form wie das kleinere der Spantschotts (4, 5) oder das kleinere der Spantprofile (1) hat.

3. Vorrichtung nach Anspruch 1, bei der das seitwärts verschiebbare Schott (7) ein Kantenprofil hat, das den Spantprofilen (1) entspricht, und eine Breite, die geringer oder gleich dem verschiebbaren Schott (6) ist und wenigstens so breit ist, wie der Unterschied zwischen den verschiebbaren Schotts (6) und dem breitesten der Spantprofile (1) oder der Spantschotts (4, 5).

4. Vorrichtung nach Anspruch 1, bei der das verschiebbare Schott (6) dafür eingerichtet ist, entlang einer untenliegenden Schiene (8) und einer entsprechenden, parallel laufenden obenliegenden Schiene (9) zu laufen.

5. Vorrichtung nach Anspruch 4, bei der das verschiebbare Schott (6) mit einer Antriebseinheit (28) ausgestattet ist, die dafür eingerichtet ist, das verschiebbare Schott (6) entlang der untenliegenden Schiene (8) zu verschieben, vorzugsweise mittels eines Zahnantriebs entlang einer gezahnten Schiene (18), die vorzugsweise ein integraler Teil der untenliegenden Schiene (8) ist.

6. Vorrichtung nach Anspruch 4, bei der das verschiebbare Schott (6) mit einem in Längsrichtung laufenden Antrieb (29) ausgestattet ist, der dafür eingerichtet ist, das verschiebbare Schott (6) entlang der obenliegenden Schiene (9) zu verschieben, vorzugsweise mittels eines Zahnantriebs entlang einer gezahnten Schiene (19), die ein integraler Teil der obenliegenden Schiene (9) sein kann.

7. Vorrichtung nach Anspruch 4, bei der das verschiebbare Schott (6) mit einem in Längsrichtung laufenden Antrieb (30) ausgestattet ist, der dafür eingerichtet ist, das verschiebbare Schott (6) entlang einer sich entlang und unter einem Laderaumdeck (3) erstreckenden Schiene (10) zu verschieben, vorzugsweise mittels eines Zahnantriebs entlang einer gezahnten Schiene (30), die einen integralen Teil der Schiene (10) bilden kann.

8. Vorrichtung nach Anspruch 6 oder 7, bei der der Zahnantrieb entlang der gezahnten Schienen (18) und (19) und auch (20) mittels eines Zahnantriebs mit einer Kraftübertragung über eine Winkelübertragung und vorzugsweise über Kardanantriebsachsen von einem gemeinsamen Antrieb (29) ausgeführt wird.

9. Vorrichtung nach Anspruch 1, bei der die Innenkante des verschiebbaren Schotts entlang eines in Längsrichtung verlaufenden Schotts oder eines in Längsrichtung verlaufenden zentralen Schotts (2) läuft, so daß das seitwärts verschiebbare Schott (7) nur entlang Steuerbord oder Backbord rumpfseitigen Spantprofilen (1) läuft.

10. Vorrichtung nach Anspruch 1, bei der ein quer verlaufender Antrieb (17) dafür eingerichtet ist, das seitwärts verschiebbare Schott (7) in Bezug auf das verschiebbare Schott (6) quer zu verschieben.

11. Vorrichtung nach Anspruch 10, mit einem horizontal ausgerichteten zweiseitig wirkenden Hydraulikzylinder (17), der auf dem verschiebbaren Schott (6) angebracht ist und wobei die mitwirkende Kolbenstange (27) des Zylinders auf dem seitwärts verschiebbaren Schott (7) angebracht ist.

12. Vorrichtung nach Anspruch 10, bei der auf dem verschiebbaren Schott (6) allgemein horizontal angeordnete Führungsschienen (16) angebracht sind, zur horizontalen Führung entsprechender Führungsschienen (26) auf dem seitwärts verschiebbaren Schott (7).

13. Vorrichtung nach Anspruch 1, die getrennte, unabhängige Schottplatten (6) mit entsprechenden seitwärts verschiebbaren Schotts (7) hat, wobei die unabhängigen Schottplatten (6) getrennt in Laderäumen (0) auf der Steuerbord- und Backbordseite eines in Längsrichtung verlaufenden zentralen Schotts (2) angeordnet sind.

14. Vorrichtung nach Anspruch 1, die mehrere in Längsrichtung verlaufende Laderäume (0) hat, die durch zwei oder mehr in Längsrichtung verlaufende Schotts (2) getrennt sind, wobei wenigstens einer von den Steuerbord- oder Backbord-Laderäumen (0) mit einem Schott (6) mit einem entsprechenden seitwärts verschiebbaren Schott (7) ausgestattet ist.

15. Vorrichtung nach Anspruch 1, bei der eine Trichterplatte (41) am hinteren Spantschott (5) angeordnet ist, wobei das engere Ende der Trichterplatte (41) nach hinten und weg vom verschiebbaren Schott (6) ausgerichtet ist und wobei es allgemein am Ende der trichterförmigen Platte mit einem Auslaßkanal (42) ausgestattet ist, wobei der Auslaßkanal (42) zum entladen von Fisch vorgesehen ist, wobei der Einlaß des Auslaßkanals (42) mit einer Verschlußvorrichtung (50) versehen ist, um den Fisch daran zu hindern, in den Auslaßkanal zu gelangen, wenn der Auslaßkanal nicht zum Entladen von Fisch verwendet wird.

16. Vorrichtung nach Anspruch 15, mit einem Wasserauslaß auf der Oberseite des Laderaums (0) über ein vorzugsweise mit einem Schwanenhals (44) ausgestattetes Rohr (43), zur Erhöhung des Wassersäulendrucks im Laderaum (0) zum wirksameren Fischausstoß durch den Auslaßkanal (42).

17. Vorrichtung nach Anspruch 1, mit einer untenliegenden laufenden Klappe (47), die klappbar an einer unteren Kante des verschiebbaren Schotts (6) angebracht und mit Rollen (48) ausgestattet ist, die dafür eingerichtet sind, entlang eines untenliegenden Abschnitts der Spantprofile (1) zu laufen, um den Zug des verschiebbaren Schotts (6) in Richtung eines geneigten Längsprofils der Spantprofile (1) zu erhöhen.

18. Vorrichtung nach Anspruch 1, mit Bürsten oder flexiblen Klappen (49), die um das verschiebbare Schott (7) herum angeordnet sind, um den Fisch daran zu hindern, zwischen dem verschiebbaren Schott (6) oder dem seitwärts verschiebbaren Schott (7) und den Spantprofilen (1), einem Längsschott (2) oder dem Laderaumdeck (3) durchzukommen.

19. Vorrichtung nach Anspruch 1, bei der eine gelochte Platte (45) nahe am vorderen Spantschott (4) angeordnet ist und ein Einlaßkanal (46) für Wasser, vorzugsweise ein untenliegendes Ventil, zwischen der gelochten Platte (45) und dem Schott (4) angeordnet ist.

20. Vorrichtung nach Anspruch 1, bei der Laderaumluken (52) im Laderaumdeck (3) angeordnet sind, wobei die Laderaumluken einsetzbare gelochte Platten (53) haben, die in einer Ebene mit den Deckenplatten des Laderaumdecks (3) sind.

21. Vorrichtung nach einem der Ansprüche 5, 6 oder 7, bei der der Antrieb (28, 29, 30) synchronisierte Elektromotoren umfaßt.

22. Vorrichtung nach einem der Ansprüche 5, 6 oder 7, bei der der Antrieb (28, 29, 30) pneumatische Motoren umfaßt.

23. Vorrichtung nach einem der Ansprüche 5, 6 oder 7, bei der der Antrieb (28, 29, 30) hydraulische Motoren umfaßt.

24. Vorrichtung nach einem der Ansprüche 5, 6 oder 7, bei der der Antrieb (28, 29, 30) geführte Drähte zum verschieben des verschiebbaren Schotts (6) umfaßt.

25. Verfahren zum Verschieben von Fisch aus einem Laderaum (0) in einem Fischtransporter, wobei der Laderaum (0) seitlich durch eine allgemein glatte Hülle über Spantprofilen (1) variierender Breite auf Spanten begrenzt wird und an seinen Enden durch ein vorderes Spantschott (4) und ein hinteres Spantschott (5) begrenzt wird und oben durch ein Laderaumdeck (3) begrenzt wird, mit einem querliegenden, vorzugsweise gelochten, verschiebbaren Schott (6), das dafür eingerichtet ist, im Laderaum (0) allgemein entlang der Hauptachse zu gewünschten Positionen zwischen dem vorderen Spantschott (4) und dem hinteren Spantschott (5) zu laufen,
**dadurch gekennzeichnet, daß**
eine seitwärts verschiebbare Schottplatte (7) auf dem verschiebbaren Schott (6) in eine Querrichtung bewegt wird, so daß sie mit einer Kante nahe an den Spantprofilen (1) vom vorderen Schott (4) in Richtung des hinteren Spantschotts (5) läuft und eine Querschnittsfläche des Laderaums (0) ausfüllt, während die verschiebbaren Schotts (6, 7) in der Schiffslängsrichtung laufen, so daß vorzugsweise aller Fisch in Richtung des hinteren Spantschotts (5) verschoben wird.

26. Verfahren nach Anspruch 25, bei dem die verschiebbaren Schotts (6, 7) auf eine Trichterplatte (41) zulaufend angetrieben werden, die nahe am hinteren Spantschott (5) angeordnet ist, so daß der Fisch auf das engere Ende der Trichterplatte zu getrieben wird, das weg von der verschiebbaren Platte (6) gerichtet ist, und weiter heraus durch einen Auslaßkanal (42) getrieben wird, der sich vorzugsweise am Ende der Trichterplatte (41) befindet.

27. Verfahren nach Anspruch 26, bei dem Wasser in den Laderaum (0) gepumpt wird, so daß in einem Wasserauslaß an der Oberseite des Laderaums (0) über ein Rohr (43) mit einem Schwanenhals (44) das Wasser steigt, so daß für ein wirksameres Entladen des Fisches durch den Auslaßkanal (42) eine Erhöhung des Wassersäulendrucks im Laderaum (0) stattfindet.

## Revendications

1. Dispositif pour déplacer du poisson vivant dans un compartiment de vivier (0) d'un navire de transport de poisson, dans lequel ledit compartiment de vivier (0) est limité latéralement par une enveloppe interne (11) généralement lisse, dans une coque généralement à double courbure sur des profilés de charpente (1), de largeur hors membres variable, et est limité à ses extrémités par une cloison de charpente avant (4) et une cloison de charpente arrière (5), et est de préférence limité à sa partie supérieure par un pont (3) de vivier, avec une cloison transversale (6) coulissante agencée pour se déplacer dans le compartiment de vivier, le long de l'axe principal du navire, jusque dans des positions souhaitées entre ladite cloison de charpente avant (4) et ladite cloison de charpente arrière (5),
**caractérisé en ce que**
au moins une cloison (7) coulissant latéralement, disposée à coulissement généralement transversal sur ladite cloison coulissante (6), et agencée pour coulisser avec un bord le long desdits profilés de charpente (1), pour combler une surface de section transversale variable dudit compartiment de vivier (0) dans chaque position intermédiaire entre les cloisons de charpente (4, 5) avant et arrière.

2. Dispositif selon la revendication 1,
dans lequel ladite cloison coulissante (6) présente un profil avec la même forme générale que la plus petite desdites cloisons de charpente (4, 5) ou le plus petit des profilés de charpente (1).

3. Dispositif selon la revendication 1,
dans lequel ladite cloison (7) coulissant latéralement présente un profil de bord correspondant aux profilés de charpente (1) et une largeur inférieure ou égale à ladite cloison coulissante (6), et au moins aussi large que la différence entre ladite cloison coulissante (6) et le plus large parmi lesdits profilés de charpente (1) ou lesdites cloisons de charpente (4,5).

4. Dispositif selon la revendication 1,
dans lequel la cloison coulissante (6) est agencée pour coulisser le long d'un rail inférieur (8) et d'un rail de supérieur, parallèle (9).

5. Dispositif selon la revendication 4,
dans lequel la cloison coulissante (6) est pourvue d'une unité motrice (28) agencée pour déplacer la cloison coulissante (6) le long du rail inférieur (8), de préférence au moyen d'une roue dentée le long d'un rail cranté (18) qui fait de préférence partie intégrante dudit rail inférieur (8).

6. Dispositif selon la revendication 4,
dans lequel la cloison coulissante (6) est pourvue d'un mécanisme d'entraînement (29) à déplacement longitudinal, agencé pour déplacer la cloison coulissante (6) le long dudit rail supérieur (9), de préférence au moyen d'une roue dentée le long d'un rail cranté (19) qui peut faire partie intégrante dudit rail supérieur (9).

7. Dispositif selon la revendication 4,
dans lequel ladite cloison coulissante (6) est pourvue d'un mécanisme d'entraînement (30) à déplacement longitudinal, agencé pour déplacer la cloison coulissante (6) le long d'un rail (10) s'étendant le long, et en dessous, d'un pont (3) de vivier, de préférence au moyen d'une roue dentée le long d'un rail cranté (30) qui peut faire partie intégrante dudit rail (10).

8. Dispositif selon la revendication 6 ou 7, dans lequel la propulsion par roues dentées le long des rails crantés (18) et (19) et également (20) se fait au moyen d'une propulsion par roues dentées avec transmission d'une force motrice par des transmissions angulaires et de préférence des axes de transmission à cardans, à partir d'un mécanisme d'entraînement commun (29).

9. Dispositif selon la revendication 1,
dans lequel le bord interne de ladite cloison coulissante court le long d'une cloison longitudinale ou d'une cloison centrale longitudinale (2), de telle sorte que la cloison (7) coulissant latéralement ne court que le long des profilés de charpente (1) de tribord ou de bâbord.

10. Dispositif selon la revendication 1,
dans lequel un mécanisme d'entraînement (17) transversal est agencé pour déplacer ladite cloison (7) coulissant latéralement, transversalement par rapport à ladite cloison coulissante (6).

11. Dispositif selon la revendication 10,
avec un cylindre hydraulique (17) à double action, dirigé horizontalement, agencé sur ladite cloison coulissante (6), et une tige de piston (27) coopérant avec ledit cylindre, agencée sur ladite cloison (7) coulissant latéralement.

12. Dispositif selon la revendication 10,
dans lequel des rails de guidage (16) disposés de manière généralement horizontale sont agencés sur ladite cloison coulissante (6) pour le guidage horizontal de rails de guidage correspondants (26) sur ladite cloison (7) coulissant latéralement.

13. Dispositif selon la revendication 1,
présentant des cloisons (6) séparées, indépendantes, possédant des cloisons (7) coulissant latéralement, corrrespondantes, lesdites cloisons (6) indépendantes étant agencées séparément dans des compartiments de vivier (0) à bâbord et à tribord d'une cloison centrale longitudinale (2).

14. Dispositif selon la revendication 1,
présentant plusieurs compartiments (0) de vivier longitudinaux séparés par deux ou plusieurs cloisons longitudinales (2), dans lequel l'un au moins parmi le compartiment (0) tribord ou bâbord est pourvu d'une cloison (6) avec une cloison (7) coulissant latéralement, correspondante.

15. Dispositif selon la revendication 1,
dans lequel un panneau en entonnoir (41) est agencé dans ladite cloison de charpente (5) arrière, l'extrémité plus étroite dudit panneau en entonnoir (41) étant dirigée vers l'arrière et à l'écart de ladite cloison coulissante (6), et étant pourvue d'un conduit de sortie (42), généralement à l'extrémité dudit panneau en entonnoir, ledit conduit de sortie (42) servant à décharger le poisson, l'entrée dudit conduit de sortie (42) étant pourvue d'un dispositif de fermeture (50) pour empêcher le poisson de se placer dans le conduit de sortie lorsque le conduit de sortie n'est pas utilisé pour décharger le poisson.

16. Dispositif selon la revendication 15,
présentant un orifice de sortie pour l'eau au sommet dudit compartiment (0) de vivier par l'intermédiaire d'un tube (43), pourvu de préférence d'un col de cygne (44), pour augmenter la pression de la colonne d'eau dans ledit compartiment (0) de vivier, pour un déchargement plus efficace du poisson par ledit conduit de sortie (42).

17. Dispositif selon la revendication 1,
avec un volet (47) s'étendant le long du fond, articulé à un bord inférieur de ladite cloison coulissante (6) et pourvu de galets (48) agencés pour rouler le long d'une partie de fond desdits profilés de charpente (1) pour augmenter la surface de ladite cloison coulissante (6) en direction d'un profil longitudinal incliné desdits profilés de charpente (1).

18. Dispositif selon la revendication 1,
présentant des brosses ou des volets flexibles (49) disposés autour de ladite cloison coulissante (7) pour empêcher le poisson de passer entre la cloison coulissante (6) ou la cloison (7) coulissant transversalement, et les profilés de charpente (1), une cloison longitudinale (2) ou le pont (3) du vivier.

19. Dispositif selon la revendication 1,
dans lequel une plaque perforée (45) est agencée près de ladite cloison de charpente (4) avant, et un moyen d'amenée (46) pour l'eau, de préférence un clapet de fond, est prévu entre ladite plaque perforée (45) et ladite cloison (4).

20. Dispositif selon la revendication 1,
dans lequel des écoutilles (52) de vivier sont agencées dans ledit pont (3) de vivier, lesdites écoutilles de vivier présentant des plaques perforées (53) insérables, de niveau avec les panneaux de plafond dudit pont (3) de vivier.

21. Dispositif selon l'une des revendications 5,6 ou 7,
dans lequel ledit mécanisme d'entraînement (28, 29, 30) comprend des moteurs électriques synchronisés.

22. Dispositif selon l'une des revendications 5,6 ou 7,
dans lequel ledit mécanisme d'entraînement (28, 29, 30) comprend des moteurs pneumatiques.

23. Dispositif selon l'une des revendication 5,6 ou 7, dans lequel ledit mécanisme d'entraînement (28, 29, 30) comprend des moteurs hydrauliques.

24. Dispositif selon l'une des revendication 5,6 ou 7, dans lequel ledit mécanisme d'entraînement (28, 29, 30) comprend des câbles guidés pour déplacer lesdites cloisons coulissantes (6).

25. Procédé pour déplacer du poisson vivant à partir d'un compartiment de vivier (0) d'un navire de transport de poisson, le compartiment de vivier (0) étant limité latéralement par une coque généralement lisse sur des profilés de charpente (1), de largeur hors membres variable, et étant limité à ses extrémités par une cloison de charpente avant (4) et une cloison de charpente arrière (5), et étant limité à sa partie supérieure par un pont (3) de vivier, avec une cloison transversale (6) coulissante, de préférence perforée, agencée pour se déplacer dans ledit compartiment de vivier (0) généralement le long de l'axe principal du navire jusque dans des positions souhaitées entre ladite cloison de charpente avant (4) et ladite cloison de charpente arrière (5),
**caractérisé en ce que**
une cloison (7) coulissant latéralement, est déplacée dans une direction transversale sur ladite cloison coulissante (6), de telle sorte qu'elle coulisse avec un bord près desdits profilés de charpente (1), à partir de ladite cloison (4) avant, en direction de ladite cloison arrière (5), et comble une section transversale dudit compartiment de vivier (0) alors que lesdites cloisons mobiles (6, 7) se déplacent dans la direction longitudinale du navire, de telle sorte que tous les poissons sont de préférence déplacés vers ladite cloison (5) de charpente arrière.

26. Procédé selon la revendication 25,
dans lequel lesdites cloisons coulissantes (6, 7) sont entraînées vers un panneau en entonnoir (41) agencé près de ladite cloison (5) de charpente arrière, de telle sorte que le poisson est chassé vers l'extrémité plus étroite dudit panneau en entonnoir dirigée à l'écart du panneau mobile (6) et étant en outre chassé dehors par un conduit de sortie (42), de préférence à l'extrémité dudit panneau en entonnoir (41).

27. Procédé selon la revendication 26,
dans lequel de l'eau est pompée dans ledit compartiment de vivier (0) de telle sorte que l'eau s'élève dans une sortie pour l'eau dans le haut dudit compartiment de vivier (0) par l'intermédiaire d'un tube (43) présentant un col de cygne (44) de façon à créer une augmentation de la pression de la colonne d'eau dans ledit compartiment de vivier (0) pour un déchargement plus efficace du poisson par le conduit de sortie (42).
